# EUROPÄISCHE PATENTSCHRIFT

(11) **EP 1 817 495 B1**
(45) Veröffentlichungstag und Bekanntmachung des Hinweises auf die Patenterteilung: **21.03.2012**
(21) Anmeldenummer: 05808006.0
(22) Anmeldetag: 22.11.2005
(51) Int. Cl.: F03D 7/04, F03D 7/02, G05B 13/02

(54) **VERFAHREN ZUR OPTIMIERUNG VON BETRIEBSPARAMETERN EINER WINDENERGIEANLAGE SOWIE EINE WINDENERGIEANLAGE**
METHOD FOR OPTIMISING OPERATIONAL PARAMETERS IN A WIND ENERGY PLANT AND A CORRESPONDING WIND ENERGY PLANT
PROCEDE POUR OPTIMALISER LES PARAMETRES DE FONCTIONNEMENT D'UNE INSTALLATION D'ENERGIE EOLIENNE ET UNE INSTALLATION D'ENERGIE EOLIENNE CORRESPONDANTE

(30) Priorität: 22.11.2004 DE 102004056255
(43) Veröffentlichungstag der Anmeldung: 15.08.2007
(73) Patentinhaber: REpower Systems SE, 22297 Hamburg (DE)
(72) Erfinder: ALTEMARK, Jens, 24768 Rendsburg (DE)
(74) Vertreter: Glawe, Delfs, Moll
(86) Internationale Anmeldenummer: PCT/EP2005/012488
(87) Internationale Veröffentlichungsnummer: WO 2006/056403

(56) Entgegenhaltungen:
- DE-A1- 10 127 451
- US-A1- 2003 057 703
- MOSETTI G ET AL: "OPTIMIZATION OF WIND TURBINE POSITIONING IN LARGE WINDFARMS BY MEANS OF A GENETIC ALGORITHM" JOURNAL OF WIND ENGINEERING AND INDUSTRIAL AERODYNAMICS, Bd. 51, Nr. 1, Januar 1994 (1994-01), Seiten 105-116, XP008012062
- FARRET F A ET AL: "Sensorless active yaw control for wind turbines" IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001, ANNUAL CONFERENCE OF THE IEEE INDUSTRIAL ELECTRONICS SOCIETY, NEW YORK, NY : IEEE, US, Bd. VOL. 1 OF 3. CONF. 27, 29. November 2001 (2001-11-29), Seiten 1370-1375, XP010572977 ISBN: 0-7803-7108-9

## Beschreibung

Die Erfindung betrifft ein Verfahren zur Optimierung von Betriebsparametern einer Windenergieanlage, insbesondere in Bezug auf solche des Rotor/Generator-Systems, bei dem ein oberer und unterer Intervallgrenzwert für den zu optimierenden Parameter vorgegeben wird sowie eine Wind-energieanlage.

Moderne Windenergieanlagen sind komplexe Gebilde, die mit Hilfe einer aufwendigen Steuerung betrieben werden. Die Steuerung ist dazu ausgebildet, verschiedene Systeme der Windenergieanlage entsprechend Vorgaben des Betreibers der Windenergieanlage und des Betreibers des Netzes, an das die Windenergieanlage angeschlossen ist, möglichst günstig zu betreiben. Möglichst günstig bedeutet hierbei in der Regel, dass ein hoher Energieertrag erzielt wird, wobei aber zusätzlich auf eine möglichst geringe Geräuschemission, geringe Belastung des Antriebsstrangs sowie der tragenden Struktur und außerdem noch auf eine gute Verträglichkeit gegenüber dem Stromnetz zu achten ist. Besondere Bedeutung kommt hierbei dem Rotor/Generator-System zu. Der Rotor mit seinen Blättern ist von entscheidender Bedeutung für die Aufnahme von Energie aus dem Wind, also für die Umsetzung von Windenergie in mechanische Energie, die wiederum durch den Generator in elektrische Energie gewandelt wird. Ein wichtiger Parameter für den Rotor ist neben konstruktiv vorgegebenden, wie die Rotorblattlänge und die Profilform der Rotorblätter, der in der Regel verstellbare Anstellwinkel. Der Anstellwinkel ist bestimmt als der Winkel einer repräsentativen Profilsehne zur Rotorebene. Der Anstellwinkel ist für die Bestimmung der aerodynamischen Verhältnisse am Rotorblatt außerordentlich bedeutend. Er ist bestimmend für die Strömungsverhältnisse zwischen dem Rotorblatt und dem scheinbaren auf das Rotorblatt einwirkenden Wind. Der scheinbare Wind besteht aus dem wahren Wind und dem durch die Bewegung des Rotorblatts induzierten Wind. Stärke und Richtung des scheinbaren Winds hängen also von der Drehgeschwindigkeit des Rotors ab, die wiederum abhängig ist von der Geschwindigkeit des wahren Winds und dem Anstellwinkel. Es ergibt sich damit ein rückgekoppeltes System für die Rotordrehzahlregelung. Das Auffinden optimaler Werte für den Parameter Anstellwinkel ist damit schwierig.

Herkömmlicherweise hat man Werte als Vorgaben für den beim Betrieb von Windenergieanlagen im Voraus ermittelte Anstellwinkel der Rotorblätter verwendet. Ein Nachteil dieser Methode besteht darin, dass sie in hohem Maße abhängig ist von der Genauigkeit der Vorabberechnung. Weiter ist diese Methode empfindlich für Abweichungen der Rotorblätter von der Idealform, beispielsweise aufgrund unvermeidlicher Herstellungstoleranzen. Insgesamt führt diese Methode daher nicht zu befriedigenden Ergebnissen. Ferner ist es aus offenkundiger Vorbenutzung auch bekannt, Langzeitmessungen an der Windenergieanlage vorzunehmen und daraus entsprechende Korrekturwerte abzuleiten. Obige Nachteile werden dadurch vermieden, jedoch ist diese Methode zeit- und kostenaufwendig.

Weiter ist es bekannt (DE-A-101 27 451), mittels eines Zeitgebers gesteuerte turnusmäßige Parametervariationen durchzuführen. Das Verfahren basiert auf der Idee, einen Parameter innerhalb einer vorgegebenen Grenze zu variieren bis ein Optimalwert gefunden ist. Ein Nachteil dieser Methode besteht darin, dass sie anfällig ist gegenüber einem lokalen Optimum. Es besteht die Gefahr, dass ein globales Optimum nicht erkannt wird. Außerdem weist die Methode den Nachteil auf, dass sie nicht zwischen stochastischen Schwankungen der Windstärke und Windrichtung und echten Verbesserungen aufgrund geänderter Parametereinstellungen unterscheiden kann. Die Methode liefert daher nicht immer befriedigende Ergebnisse.

Der Erfindung liegt die Aufgabe zugrunde, ein Verfahren der eingangs genannten Art dahingehend zu verbessern, dass unter durch stochastische Schwankungen erschwerten Bedingungen eine gute Optimierung erreicht wird. Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist bei einem Verfahren zur Optimierung von Betriebsparametern einer Windenergieanlage, insbesondere in Bezug auf deren Rotor/Generator-System, unter Bestimmen eines oberen und eines unteren Intervallgrenzwerts für einen zu optimierenden Parameter, ein Zyklus vorgesehen, bei dem die Windenergieanlage alternierend mit den Intervallgrenzwerten betrieben wird, wobei jeweils ein Datensatz mit einer Zielgröße erzeugt wird, und zwar über eine einstellbare Anzahl von Wiederholungen, Auswerten der Datensätze zu den Intervallgrenzwerten unter Bildung eines Gütemaß, Identifizieren des Intervallgrenzwerts mit dem schlechteren Gütemaß, Ersetzen zumindest dieses Intervallgrenzwerts durch Verschieben um einen Schrittwert Δ in Richtung des anderen Intervallgrenzwerts, und Wiederholen des Zyklus.

Die Erfindung beruht auf dem Gedanken, ein iteratives Verfahren zur Parameteroptimierung einzusetzen. Die Erfindung hat erkannt, dass durch ein iteratives Verfahren mit einer ausreichend großen Zahl von Proben stochastische Schwankungen ausgeglichen werden können, so dass sie sich praktisch nicht mehr störend auf das Ergebnis auswirken. Anders als bei den bekannten Verfahren wird das erfindungsgemäße statistische Verfahren nicht negativ durch stochastisch schwankende Größen, wie beispielsweise Windgeschwindigkeit und -richtung, beeinflusst. Es ist damit auch unter schwierigen Bedingungen sehr gut in der praktischen Anwendung.

Das Verfahren ist in seinem Konzept von bestechender Einfachheit, es benötigt zu Beginn lediglich zwei Intervallgrenzwerte für die zu optimierenden Parameter. Darauf aufbauend arbeitet das Verfahren selbsttätig und ist in der Lage, sowohl einen zwischen den Intervallgrenzwerten liegenden oder auch einen außerhalb der Intervallgrenzwerte liegenden Optimalwert zu bestimmen. Die Erfindung erreicht dies, indem zu den Intervallgrenzwerten hintereinander abwechselnd der gewünschte Zielparameter gemessen und abgespeichert wird. Dieses Wechselspiel wird eine bestimmte Anzahl von Malen wiederholt. Diese Anzahl kann fest vorgegeben oder variabel je nach Parameter und bereits erreichter Güte der Optimierung, ausgedrückt durch die Gütemaße, sein. Weiterhin werden die Werte für die Zielgröße jeweils für die beiden Intervallgrenzwerte ausgewertet, und es wird für jeden der Intervallgrenzwerte in Abhängigkeit von dem Resultat ein Gütemaß gebildet. Das Gütemaß ist ein Maßstab für die Effizienz, mit welcher die Windenergieanlage bei dem jeweiligen Intervallgrenzwert arbeitet. Es wird durch Vergleich ermittelt, mit welchem der Intervallgrenzwerte das schlechtere Gütemaß erreicht wird. Der dazugehörige Intervallgrenzwert ist der schlechtere , der andere der bessere. Das Verfahren sieht vor, den schlechteren Intervallgrenzwert mit einem anderen Wert zu ersetzen, der um den einstellbaren Schrittwert Δ in Richtung zu dem besseren Intervallgrenzwert geändert ist. Der Ablauf wiederholt sich dann mit dem so in seinen Grenzen geänderten Intervall. Auf diese Weise kann schließlich am Ende ein optimaler Wert für den Parameter ermittelt werden. Vorzugsweise ist dieser Parameter ein Anstellwinkel der Rotorblätter, und zwar für alle gemeinsam oder individuell für jedes Rotorblatt. Für das erfindungsgemäße Verfahren hat es den Vorzug, dass es selbsttätig einen Optimalwert für die Einstellung der Rotorblätter ermittelt. Eine Messung der Windgeschwindigkeit zur Berechnung eines optimalen Anstellwinkels bedarf es dank der Erfindung nicht mehr. Auch andere mit der Windgeschwindigkeit bzw. mit den Eigenschaften des Winds zusammenhängende Parameter brauchen nicht mehr (oder nur noch mit geringerer Genauigkeit) gemessen zu werden. Das erfindungsgemäße Verfahren ermöglicht eine Optimierung, die sich frei von der Messung von Windparametern macht. Damit wirken sich Ungenauigkeiten, wie sie bei der Messung der Windparameter in der Regel in erheblichem Maße auftreten (oder nur durch sehr aufwendige Extramaßnahmen vermieden werden können), nicht mehr negativ auf den Betrieb der Windenenergieanlage aus. Dies ist insbesondere von Bedeutung bei einer verhältnismäßig dichten Anordnung von Windenergieanlagen auf einem Raum, wie sie typischerweise in Windparks auftritt. Hier werden durch benachbarte Windenergieanlagen typischerweise die Messungen von Windparametern, wie Windstärke oder Windrichtung, negativ beeinflusst. Ein optimaler Betrieb der Windenergieanlage ist damit kaum möglich. Die Erfindung beruht auf der verblüffenden Erkenntnis, dass eine Messung dieser Parameter gar nicht erforderlich ist. Statt dessen wird mit dem erfindungsgemäßen Verfahren unter den jeweils gegebenen Windbedingungen, unabhängig von Richtung und Stärke, der jeweils optimale Anstellwinkel ermittelt. Zwar kann eine hohe Zahl von Proben bzw. Iterationen zu einer Verlängerung der für die Verfahrensdurchführung erforderlichen Zeit führen, jedoch spielt dies bei einem automatisierten Verfahren, wie es die Erfindung vorsieht, keine bedeutende Rolle.

Dank der Erfindung wird eine bessere Ausnutzung der Windenergieanlage erreicht. Ertragseinbußen durch eine nicht optimale Wahl des zu optimierenden Parameters sind dadurch verringert.

Nachfolgend seien einige verwendete Begriffe erläutert: Unter einem Parameter wird ein das Systemverhalten beeinflussender Koeffizient des Systems verstanden. Es kann sich um einen Parameter des mechanischen oder des elektrischen Systems, oder um einen solchen der Steuerungseinrichtung handeln.

Die zu optimierende Zielgröße ist eine Systemvariable. Sie ergibt sich als Folge anderer Variablen und Parameter. Beispiele für die Zielgröße sind unter anderem die abgegebene elektrische Leistung, der emittierte Geräuschpegel, die Strukturbelastung der Maschine durch Biege- und/oder Vibrationslasten sowie Größen der Netzverträglichkeit, wie insbesondere Flicker. Die Zielgröße muss nicht zwingend ein Skalar sein, sie kann auch vektoriell aus mehreren Größen zusammengesetzt sein.

Die Intervallgrenzwerte können zu Beginn des Verfahrens direkt vorgegeben werden. Es ist aber auch möglich, die Intervallgrenzwerte zu berechnen, und zwar aus einem Betriebswert (α_{B}) und einen Streuwert (α_{OFF}). Letzteres ermöglicht eine einfache Einbindung in eine vorhandene Betriebssteuerung. Dabei werden die von der Betriebssteuerung in herkömmlicher Weise bestimmten Parameter jeweils als Startwert für den Betriebswert (α_{B}) herangezogen. Einer gesonderten Bestimmung eines geeigneten Werts zum Starten des erfindungsgemäßen Verfahrens bedarf es dann nicht.

In der Regel wird es so sein, dass am Ende eines Zyklus beide Intervallgrenzwerte geändert werden. Vorzugsweise geschieht das dadurch, dass der Betriebswert geändert wird. Es kann aber auch vorgesehen sein, dass zusätzlich das Intervall verkleinert werden soll. Dann erfolgt die Änderung bei dem besseren Intervallgrenzwert in einem geringeren Maß, und zwar um einen Verengungswert δ weniger. Dadurch wird das Intervall sukzessive zyklusweise verkleinert, bis schließlich das erfindungsgemäße Verfahren bei einem Optimumswert konvergiert. Es kann auch vorgesehen sein, dass der Verengungswert negativ ist. Dann weitet sich der Bereich zwischen den Intervallgrenzwerten. Das kann zu Beginn der Optimierung von Vorteil sein, wenn schnell ein recht großes Intervall abgesucht werden soll.

Zweckmäßigerweise wird der Zyklus so lange wiederholt durchgeführt, bis ein vorgebbares Abbruchkriterium ε erreicht ist. Dabei steht ε zweckmäßigerweise für einen Differenzbetrag des Gütemaßes. Ist dieser Betrag klein genug, so kann das Optimierungsverfahren beendet werden. Es ist aber nicht unbedingt erforderlich, das Gütemaß für das Abbruchkriterium heranzuziehen. Es kann auch vorgesehen sein, dass der Zyklus so lange wiederholt wird, bis die Intervallgrenzwerte einen Abstand von nur noch ε' erreicht haben.

Zweckmäßigerweise wird die Schrittweite Δ bzw. gegebenenfalls der Verengungswert δ mittels eines Prädiktors bestimmt. Dies hat den Vorzug gegenüber einer starren Vorgabe, dass durch den Prädiktor häufig ein schnelleres Konvergieren des erfindungsgemäßen Verfahrens zu einem Optimumwert hin erreicht werden kann. Für den Prädiktor können an sich bekannte Optimierungsverfahren verwendet werden, beispielsweise generische Algorithmen.

Bei einer bewährten Ausführungsform wird das Gütemaß durch Summenbildung berechnet. Dies ist eine besonders einfach und effizient zu berechnende Auswertung bzw. Gütemaßbildung. Soll auch die Anzahl der verwendeten Daten berücksichtigt werden, so kann auch eine Mittelwertbildung vorgesehen sein. Mittelwert ist hierbei weit zu verstehen; der Begriff umfasst außer dem arithmetischen Mittel auch andere Berechnungsmethoden, wie z. B. das geometrische Mittel. Es versteht sich, dass auch aufwendigere statistische Verfahren vorgesehen sein können, insbesondere solche mit einer Gewichtung der Daten über ein vorgebbares Zeitintervall (z.B. mittels Rechteck- oder Hammingfenster).

Häufig ist es so, dass lediglich eine Zielgröße zu optimieren ist. Es kann aber auch sein, dass mehrere Zielgrößen optimiert werden sollen. In dem Fall ist zweckmäßigerweise das Gütemaß mehrdimensional gebildet. Vorzugsweise geschieht dies in Gestalt eines Vektors.

Ein Parameter für die Optimierung ist vorzugsweise der Rotorblattanstellwinkel und die Zielgröße ist die abgegebene elektrische Leistung. Wie eingangs erläutert, ist der Anstellwinkel der Rotorblätter ein bedeutendes Kriterium für die Effizienz der Aufnahme von mechanischer Energie zum Antrieb des Generators aus der Energie des Windes. Sie ist damit besonders maßgebend für die erzeugte elektrische Leistung und damit für den Ertrag einer Windenergieanlage. Andererseits ist es aber so, dass der Anstellwinkel bestimmt ist durch die Strömungsverhältnisse zwischen dem scheinbaren Wind und dem einzelnen Rotorblatt, wobei der scheinbare Wind wiederum von dem wahren Wind und der Drehzahl des Rotors bestimmt ist. Die Drehzahl des Rotors wiederum wird maßgeblich bestimmt durch den Anstellwinkel. Es ergibt sich also ein rückgekoppelter Zusammenhang, bei dem das erfindungsgemäße Optimierungsverfahren mit besonderem Vorteil eingesetzt werden kann.

Es versteht sich, dass das Verfahren auch für andere Parameter herangezogen werden kann. Beispielsweise kann als Parameter die Momenten-Kennlinie des Generators verwendet werden. Diese hat ebenfalls maßgeblichen Einfluss auf die Rotordrehzahl und somit auch auf den Blattanstellwinkel. Weitere zweckmäßige Parameter sind Windparameter, wie Windfahnen-Offset zur Bestimmung von Ungenauigkeiten bzw. Verwirbelungen im Bereich einer Windfahne der Windenergieanlage. Es können auch andere Parameter, wie Regelparameter von Regeleinrichtungen der Windenergieanlage (z.B. PID-Regler) oder Parameter einer Steuerung für einen Umrichter der Windenergieanlage (z.B. Varianz der Leistung, Netzflicker oder Oberschwingungen) mit dem erfindungsgemäßen Verfahren optimiert werden.

Es hat sich bewährt, nicht nur eine, sondern mehrere Zielgrößen zu verwenden. Ist beispielsweise eine zu optimierende Zielgröße die abgegebene elektrische Leistung, so kann vorzugsweise noch zusätzlich als Zielgröße ein Maß für die Strukturbelastung, z.B. der Rotorblätter, sowie für die Geräuschemission, gegebenenfalls auch ein Parameter für die Maschinenbelastung (damage equivalence load) zusätzlich vorgesehen sein.

Die Erfindung bezieht sich ferner auf eine Windenergieanlage wie im Anspruch 14 angegeben wird.

Die Erfindung wird anhand eines in der Zeichnung dargestellten Ausführungsbeispiels näher erläutert. Es zeigen:
- Fig. 1: eine Gesamtansicht einer Windenergieanlage zur Durchführung des erfindungsgemäßen Verfahrens;
- Fig. 2: eine Teilansicht des Rotors der in Fig. 1 dargestellten Windenergieanlage;
- Fig. 3: ein schematisches Blockschaltbild der in Fig. 1 dargestellten Windenergieanlage;
- Fig. 4: ein Rahmenverfahren für das erfindungsgemäße Optimierungsverfahren;
- Fig. 5: einen Ablaufplan gemäß einem Ausführungsbeispiel des erfindungsgemäßen Optimierungsverfahrens;
- Fig. 6: eine Detailansicht einer Variation des in Fig. 5 dargestellten Verfahrens; und
- Fig. 7: eine Detailansicht einer weiteren Variation des in Fig. 5 dargestellten Verfahrens.

Eine zur Durchführung des erfindungsgemäßen Verfahrens vorgesehene Windenergieanlage umfasst einen als Turm 1 ausgebildeten Unterbau mit einem aufgesetzten Maschinenhaus 2. In oder an diesem sind die meisten wesentlichen Komponenten der Windenergieanlage angeordnet.

An einer Stirnseite des Maschinenhauses 2 ist ein Rotor 3 drehbar mittels einer Rotorwelle 50 angeordnet. Über diese Rotorwelle 50 treibt der Rotor 3 ggf. über ein Getriebe einen in dem Maschinenhaus 2 angeordneten Generator 5 an. Der Generator 5 kann in verschiedenen Bauweisen realisiert sein, es kann sich um einen Gleich-, Wechsel- oder Drehstromgenerator handeln. Weiter kann es sich um eine Synchron- oder um eine Asynchronmaschine handeln, mit einfacher oder doppelter Speisung. Vorzugsweise ist der Generator 5 als doppelt gespeiste Asynchronmaschine ausgeführt. Der Generator 5 ist über einen Umrichter 7 und im Einzelnen nicht näher dargestellte Verbindungsleitungen mit einem elektrischen Versorgungsnetz 9 verbunden. Weiter ist eine Steuereinrichtung 6 vorgesehen, die den Betrieb der Windenergieanlage kontrolliert. Es ist eine Messeinrichtung 23 zur Bestimmung der abgegebenen elektrischen Leistung vorgesehen. Bei der gemessenen elektrischen Leistung handelt es sich vorzugsweise um die Wirkleistung P, da sie besser als die Schein- oder Blindleistung ein Maß für die tatsächlich von der Windenergieanlage erbrachte Leistung ist. Es kann aber auch vorgesehen sein, anstelle der Leistung die abgehende elektrische Energie zu verwenden. Dies hat den Vorteil, dass bei Messungen über einen längeren Zeitraum automatisch eine Integration durchgeführt wird. Zweckmäßigerweise kann dazu der ohnehin in der Windenergieanlage vorhandene Zähler für die abgegebene Energie (Kilowattstundenzähler) herangezogen werden. Damit wird nicht nur ein gesonderter Sensor erspart, sondern es erfolgt auch automatisch eine Integration des Leistungssignals, wodurch sich unerwünschtes Rauschen im Messsignal verringert. Es können auch andere Parameter herangezogen werden, welche ein Maß für die von dem Rotor-/Generatorsystem erbrachte Energie bzw. Leistung sind. In Betracht kommen hier insbesondere das von dem Rotor abgegebene mechanische oder das vom Generator erzeugte elektrische Moment, das je nach Betriebsbereich mit oder ohne Drehzahlbewertung für die Bildung des Effizienzmaß herangezogen werden kann.

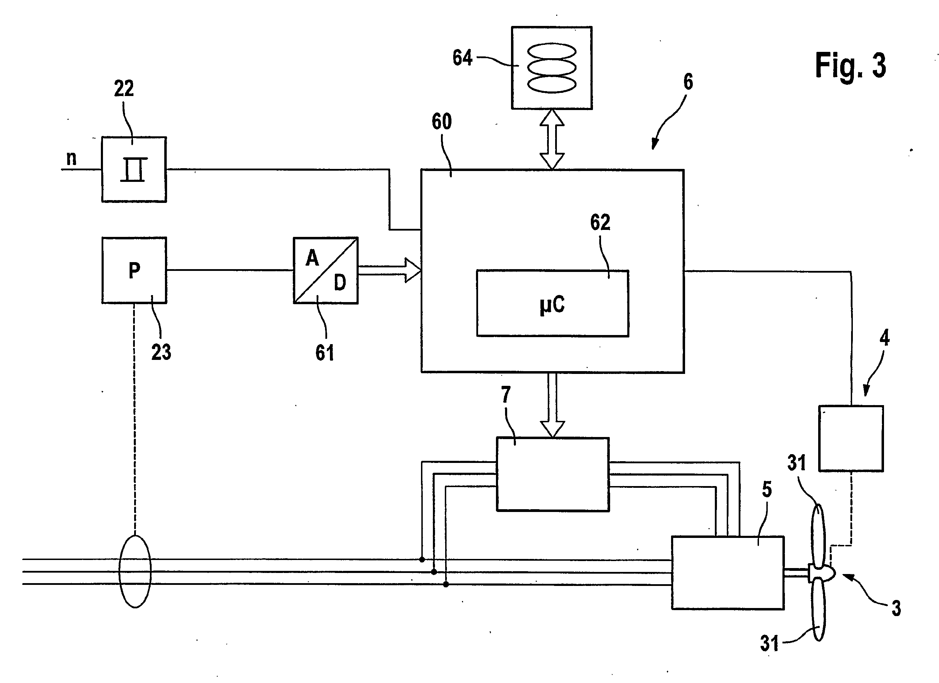

Der Aufbau der Steuereinrichtung 6 ist in Fig. 3 schematisch dargestellt. Die Messeinrichtung 23 für die abgegebene elektrische Leistung ist mit einem Analog/Digitalwandler 61 verbunden. Er ist dazu ausgebildet, in regelmäßigen, einstellbaren Zeitabständen die von der Messeinrichtung 23 gelieferten Signale in Daten eines Datensatzes umzuwandeln. Der Datensatz wird über eine Verbindungsleitung an eine Zentraleinheit 60 übermittelt. Die Zentraleinheit 60 weist einen Mikroprozessor 62 zur Ausführung der zum Betrieb der Windenergieanlage erforderlichen Steuer- und Betriebsprogramme auf. Weiter ist mit der Zentraleinheit 60 ein Speicher 64 verbunden. An Ausgängen der Zentraleinheit 60 sind der Generator 5 und der Umrichter 7 angeschlossen. Weiter ist an einen Ausgang der Zentraleinheit 60 eine Blattwinkelverstelleinrichtung 4 angeschlossen. Sie wird nachfolgend näher erläutert.

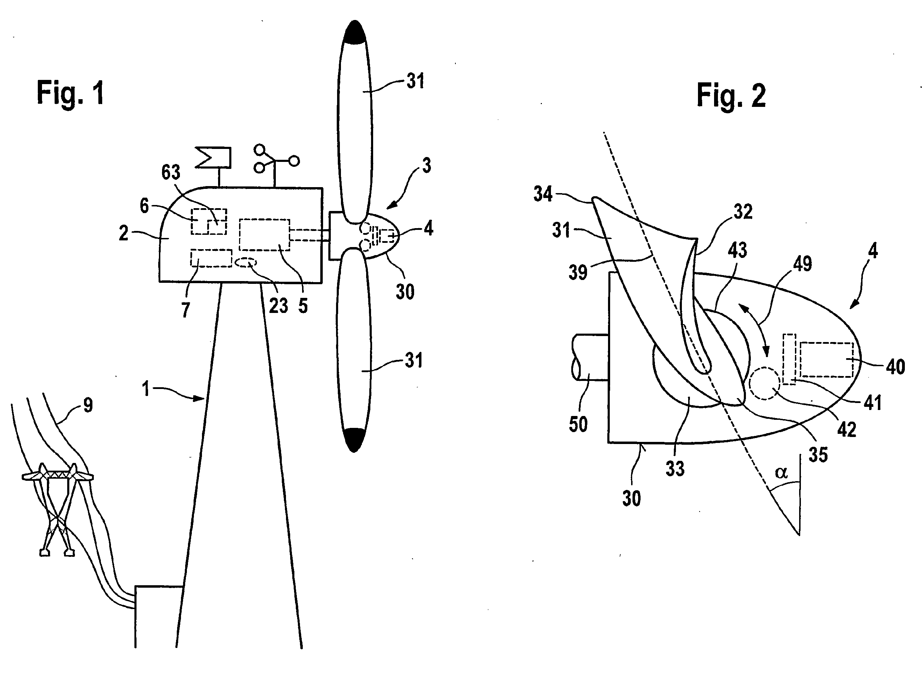

Die Blattwinkelverstelleinrichtung 4 dient zum Verstellen des Anstellwinkels α der Rotorblätter 31. Wie in Fig. 2 dargestellt ist, ist der Winkel α der eingeschlossene Winkel zwischen einer repräsentativen Profilsehne 39 des Rotorblatts 31 und der Drehebene des Rotors, deren Normale durch die Rotorwelle 50 bestimmt ist. In Fig. 2 ist ein Blick auf die Blattspitze 32 eines der in Fig. 3 dargestellten Rotorblätter 31 gezeigt. Die Profilsehne 39 verbindet die im vorderen Bereich liegende Nasenkante 35 mit der Hinterkante 34 des Rotorblatts 31. Das Rotorblatt 31 ist mit seiner Flügelwurzel 33 in der Nabe 4 verankert. Das Rotorblatt 31 weist eine Verwindung auf, bei der die Profilsehne ausgehend von der Blattspitze 32 zur Flügelwurzel 33 einen stetig größer werdenden Anstellwinkel aufweist. Die Flügelwurzel 33 ist im Bereich der Nabe 4 vorzugsweise kreisrund ausgebildet, so dass das Rotorblatt 31 um den Mittelpunkt des Kreises geschwenkt werden kann. Die Blattverstelleinrichtung 4 umfasst einen in der Spitze der Nabe 4 angeordneten Antriebsmotor 40, an dessen kraftabgebender Welle ein Winkelgetriebe umfassend ein großes Zahnrad 41 und ein Ritzel 42 angeordnet ist. Das Ritzel 42 greift in eine mit der Flügelwurzel 33 zusammenwirkende Umfangsverzahnung ein. Dadurch wird bewirkt, dass beim Betätigen des Antriebsmotors 40 das Rotorblatt 31 verschwenkt werden kann, wie es durch den in Fig. 2 dargestellten Doppelpfeil 49 symbolisiert ist.

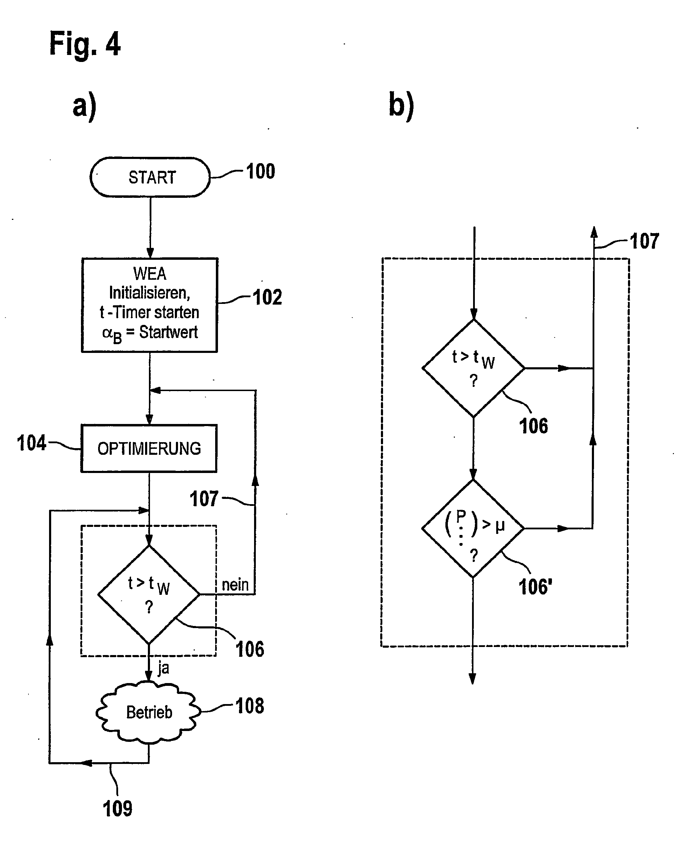

Es wird nun der Ablauf des erfindungsgemäßen Verfahrens erläutert. Es wird Bezug genommen auf Fig. 4a. Zu Beginn 100 des Verfahrens wird die Windenergieanlage initialisiert. Das bedeutet, dass Intervallgrenzwerte gesetzt werden, alte Daten aus Speichern gelöscht werden und die Windenergieanlage im Übrigen in an sich bekannter Weise auf den Betrieb vorbereitet wird. Für die Erfindung zusätzliche Schritte bei der Initialisierung 102 sind das Starten eines Timers t und das Bestimmen eines Betriebswertes α_{B} für einen zu optimierenden Parameter als ersten Wert, mit dem der Betrieb aufgenommen wird. Dieser Wert kann in an sich bekannter Weise bestimmt werden, wie es bei einer Windenergieanlage ohne das erfindungsgemäße Verfahren geschehen würde. Nach der Initialisierung kann das erfindungsgemäße Optimierungsverfahren 104 beginnen.

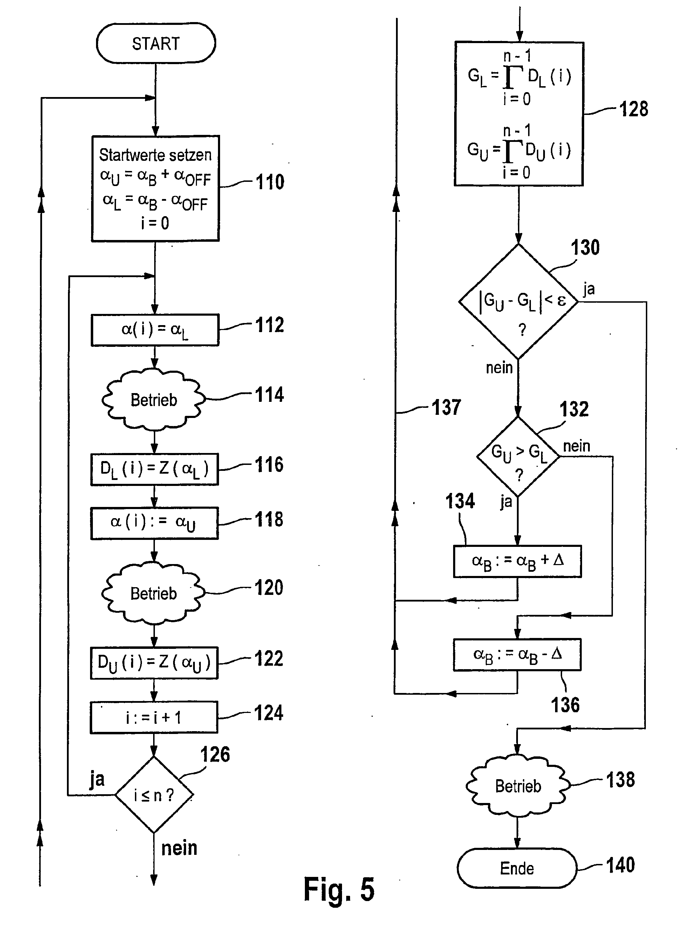

Es wird nun Bezug genommen auf Fig. 5. Ausgehend von dem Betriebswert α_{B} werden in einem ersten Schritt 110 jeweils ein oberer und ein unterer Intervallgrenzwert α_{U} bzw. α_{L} gesetzt, indem zu dem Betriebswert α_{B} ein initialer Streuwert α_{OFF} addiert bzw. subtrahiert wird. Ein Stichprobenzähler i wird auf Null gesetzt. Es wird dann zu Beginn eines Zyklus einer der beiden Intervallgrenzwerte eingestellt, in dem dargestellten Ausführungsbeispiel der Intervallgrenzwert α_{L} (Schritt 112). Die Rotorblätter 31 werden mittels der Verstelleinrichtung 4 auf einen ersten Wert α(i) = α_{L} gestellt. Mit diesem Anstellwinkel wird dann die Windenergieanlage betrieben (Schritt 114). Die Steuereinrichtung 6 erfasst dabei mittels der Messeinrichtung23 die über einen bestimmten Zeitraum abgegebene elektrische Energie und gegebenenfalls weitere Parameter. Der so ermittelte Messvektor Z(α_{L}) wird nach A/D-Wandlung (soweit erforderlich) als Datensatz D_{L}(i) in den Speicher 64 eingespeichert (Schritt 116). Im nächsten Schritt 118 wird der Anstellwinkel α(i) auf den oberen Intervallgrenzwert α_{U} geändert und die Windenergieanlage mit diesem geänderten Anstellwinkel betrieben (Schritt 120). Wie schon zuvor wird aus Daten der Messeinrichtung 23 und ggf. weiterer Parameter ein Messvektor gebildet und in dem Speicher 64 abgespeichert, und zwar als Datensatz für den oberen Wert D_{U}(i) (Schritt 122). Damit ist eine Stichprobenziehung mit einem alternierenden Betrieb der Windenergieanlage mit dem oberen und unteren Intervallgrenzwert vollendet. Es wird nun zum Abschluss der Stichprobenzähler i um einen Wert erhöht (Schritt 124). Liegt die Anzahl der so gezogenen Stichproben unter einer voreinstellbaren Grenze n, so werden erneut Stichproben ab dem Schritt 112 so lange gezogen, bis deren Anzahl gleich dem voreinstellbaren Wert n ist (Schritt 126). Die Werte für n liegen beispielsweise im Bereich zwischen 100 bis 100.000, bewährt hat sich insbesondere ein Bereich zwischen 1.000 und 10.000. Vorzugsweise ist die Anzahl veränderbar, beispielsweise in Abhängigkeit der Varianz der in den Datensätzen enthaltenen Parameter. Der Zeitraum, über den eine Stichprobe gewonnen wird, ist zweckmäßigerweise in Abhängigkeit von dem betrachteten Parameter gewählt. In dem dargestellten Ausführungsbeispiel mit dem Anstellwinkel α liegt die Zeitdauer zweckmäßigerweise zwischen 10 und 120 Sekunden. Für eine Momentenkennlinie als Parameter liegt die Zeitdauer zweckmäßigerweise zwischen 30 Sekunden und 10 Minuten, und für Regelparameter zweckmäßigerweise zwischen 10 Sekunden und 10 Minuten. Für dynamischere Größen, wie bspw. Parameter des Umrichters, ist eine kürzere Zeitdauer vorzuziehen, z.B. zwischen 10 Millisekunden und 30 Sekunden. Der Wahl dieser Zeitdauer liegt die Erkenntnis zugrunde, dass sie vorzugsweise so lang gewählt wird, dass nicht stationäre Effekte eliminiert werden, wie bspw. solche hervorgerufen durch Trägheit der Luftströmung (dynamic wake).

Nach Abschluss des Stichprobenziehvorgangs beginnt mit Schritt 128 der Auswertevorgang. Die in dem Speicher 64 enthaltenen Datensätze für den unteren und oberen Anstellwinkel D_{L}(i) und D_{U}(i) werden für alle (i) von 0 bis n-1 abgerufen und ausgewertet. Die Auswertung kann sich auf alle Elemente des Datensatzes oder auch nur auf Teile daraus beziehen. Im erstgenannten Fall werden die einzelnen Elemente zweckmäßigerweise mittels Wichtungskoeffizienten zu einer skalaren Größe verknüpft. Im zweitgenannten Fall kann direkt mit dem Betrag gerechnet werden. Das Gütemaß kann eine aufwendige mehrparametrige, nichtlineare Funktion sein. Es kann aber auch ein einfaches Gütemaß vorgesehen sein, zu dessen Bildung nicht auf gespeicherte Einzelwerte zurückgegriffen zu werden braucht. Ein solches Gütemaß hat den Vorteil, dass es fortlaufend während eines laufenden Stichprobenziehung-Zyklus gebildet werden kann. Die gemessenen Werte werden dabei direkt zur Bildung des Gütemaß verarbeitet. Das hat den Vorzug, dass eine Einspeicherung der gemessenen Werte nicht erforderlich ist. Ein Beispiel für ein solches Gütemaß ist eine Wertesumme, zum Beispiel für die über einen Zyklus in das Netz eingespeiste Energie einer Windenergieanlage, die im Bereich der optimalen Schnelllaufzahl betrieben wird. Die Energiewerte werden getrennt nach den Intervallgrenzwerten aufsummiert; das kann fortlaufend bei der Messung geschehen, so dass eine Speicherung nicht erforderlich ist. Zur Bestimmung, ob die Windenergieanlage während der Ziehung der Stichproben tatsächlich im Bereich der optimalen Schnelllaufzahl betrieben wird, ist zweckmä-βigerweise ein Betriebsartdetektor 22 vorgesehen. Er ist dazu ausgebildet, anhand der Drehzahl des Rotors 3 zu ermitteln, ob die Anlage in diesem Bereich betrieben wird. Zweckmäßigerweise ist der Detektor 22 als Schwellwertschalter ausgebildet, mit einer unteren Grenzdrehzahl und einer oberen Grenzdrehzahl, zwischen denen der Betriebsbereich der optimalen Schnelllaufzahl liegt. Der Detektor 22 braucht nicht unbedingt die Drehzahl als Eingangssignal zu verwenden, es kann auch die von der Windenergieanlage abgegebene elektrische Leistung zur Bestimmung herangezogen werden. Häufig wird es auch so sein, dass ein entsprechendes Statussignal für die Betriebsart in der Maschinensteuerung 6 bereits vorhanden ist. Es genügt dann, dieses Signal auszulesen. Gesonderte Sensoren sind dann nicht erforderlich. Mit dem Detektor 22 wird sichergestellt, dass nur solche Messwerte als Stichproben für das statistische Verfahren herangezogen werden, in denen die Windenergieanlage im Bereich der optimalen Schnelllaufzahl betrieben wurde. Ist das nicht der Fall, so ist die Stichprobe ungültig und kann nicht verwendet werden. Sie wird verworfen und die Stichprobenziehung wird wiederholt.

Weitere Vereinfachungen des erfindungsgemäßen Verfahrens sind möglich. So brauchen die Messeinrichtung 23, der A/D-Wandler 61 und der Speicher 64 nicht zwingend vorgesehen zu sein. Häufig stehen das Maß für die elektromechanische Quantität und ggf. die anderen verwendeten Parameter ohnehin aus der Betriebssteueranlage der Windenergieanlage zur Verfügung, und zwar in vielen Fällen auch bereits als Mittelwerte. Eine gesonderte Messung und Speicherung ist dann entbehrlich. Die Parameter können direkt gemäß dem erfindungsgemäßen Verfahren weiterverarbeitet werden.

Am Ende des Schritts 128 stehen Werte G_{L} und G_{U} als Gütemaße für die beiden Intervallgrenzwerte bereit. In einem nächsten Schritt 130 wird geprüft, ob die beiden Gütemaße G_{U} und G_{L} gleich groß sind (mit einer Toleranz ε) oder nicht. In dem Fall einer Ungleichheit wird geprüft, zu welchem der beiden Intervallgrenzwerte das bessere Gütemaß gehört. Hat der obere Intervallgrenzwert das bessere Gütemaß erreicht, wird der Betriebswert α_{B} um den Schrittwert Δ erhöht (Schritt 134). Hat der untere Intervallgrenzwert das bessere Gütemaß erreicht, so wird der Betriebswert α_{B} um den Schrittwert Δ erniedrigt (Schritt 136). Nach einem Rücksprung 137 beginnt das Verfahren mit Schritt 110 erneut, und es wird so lange fortgesetzt, bis schließlich ein optimaler Wert erreicht ist. Dies wird durch Vergleich der beiden Gütemaße in Schritt 132 ermittelt. Im positiven Fall war das Optimierungsverfahren erfolgreich und es wird in einen Regelbetrieb 138 übergegangen. Das Optimierungsverfahren erreicht damit sein Ende 140. Der weitere Ablauf ist dann wie in Fig. 4a dargestellt.

Nun wieder zurückkommend auf Fig. 4a, wird mit dem somit ermittelten Optimalwert die Windenergieanlage betrieben (Schritt 108). Dies wird so lange fortgesetzt (Rückführung 109), bis eine einstellbare Wiederholungszeit t_{W} abgelaufen ist (Schritt 106). Dann folgt ein Rücksprung (107) zu dem Optimierungsverfahren (104) zur erneuten Ausführung. - Das Warten bis zum Ablauf einer vorbestimmbaren Wiederholungszeit in Schritt 106 braucht nicht das einzige Kriterium zu sein, dass zur Wiederholung des erfindungsgemäßen Optimierungsverfahrens 104 führt. Alternativ oder zusätzlich können weitere Kriterien vorgesehen sein (siehe Fig. 4b). Beispielsweise ist in Fig. 4b eine Erweiterung (Schritt 106') dargestellt, wonach zusätzlich auf signifikante Änderungen in einem der verwendeten Parameter, beispielsweise der elektrischen Leistung untersucht wird. Wird ein voreinstellbarer Grenzwert µ überschritten, so erfolgt der Rücksprung 107 auch dann, wenn die Wiederholungszeit noch nicht abgelaufen ist.

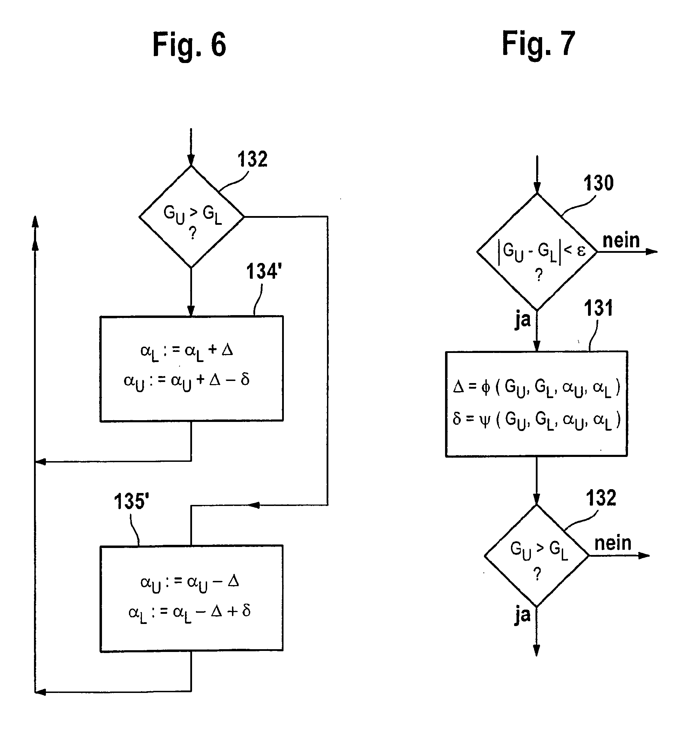

Die Erfindung ist nicht auf das in Fig. 5 dargestellte Ausführungsbeispiel beschränkt. Verschiedene Variationen des erfindungsgemäßen Optimierungsverfahrens sind denkbar. So sind in Fig. 6 zwei voneinander unabhängige Variationen dargestellt. Die erste betrifft die Änderung der Intervallgrenzwerte bei der Iteration. Anders als im Schritt 134 werden in Schritt 134' nicht der Betriebswert α_{B} und damit beide Intervallgrenzwerte verschoben, sondern es werden direkt neue Intervallgrenzwerte festgesetzt, die jeweils um den Schrittwert Δ erhöht sind. Die zweite Variation betrifft eine Veränderung der Intervallbreite. Das kann beispielsweise auf die in Schritt 134' dargestellte Weise geschehen. Der untere Intervallgrenzwert α_{L} wird unverändert um den Schrittwert Δ erhöht. Der obere Intervallgrenzwert α_{U} wird aber nicht um denselben Betrag erhöht, sondern der Betrag ist um einen Verengungswert δ verringert. Dabei kann δ auch denselben Wert wie Δ betragen, d.h. der obere Intervallgrenzwert bliebe unverändert. Dadurch wird eine Verkleinerung des durch die beiden Startweite bestimmten Intervalls um den Verengungswert δ erreicht, so dass das erfindungsgemäße Verfahren schneller konvergiert. Dementsprechend wird in Schritt 135' der obere Intervallgrenzwert in unveränderter Weise um den Schrittwert Δ gesenkt; während der untere Intervallgrenzwert α_{L} nur um Δ-δ gesenkt wird. Es versteht sich, dass bei dieser Variante in Schritt 110 dann die Intervallgrenzwerte nicht erneut initialisiert werden. - In entsprechender Weise kann alternativ auch vorgesehen sein, den Streuwert α_{OFF} um den halben Verengungswert δ/2 zu verringern. Damit ergibt sich ebenfalls eine Verengung des Intervalls um den Verengungswert δ.

Zur Bestimmung der Schrittwerte Δ und gegebenenfalls δ wird vorzugsweise ein Prädiktor verwendet. Wie in Fig. 7 dargestellt ist, werden dazu in Schritt 131 zwei Prädiktorfunktionen Φ und Ψ auf Grundlage der ermittelten Werte für das Gütemaß sowie der Intervallgrenzwerte, gegebenenfalls auch unter Einbeziehung der im Speicher 64 enthaltenen Datensätze, ausgeführt. Mit Hilfe der Prädiktorfunktionen können der Schrittwert Δ und der Verengungswert δ an die jeweiligen Gegebenheiten angepasst werden. Ferner kann vorgesehen sein, anstatt durch einen Prädiktor den Schrittwert Δ und den Verengungswert δ aufgrund von Kennlinien oder von Lookup-Tabellen zu bestimmen. Das hat den Vorteil, dass Erfahrungswerte bezüglich der Wahl der Schrittwerte Δ und der Verengungswerte δ zu Beginn und Ende des erfindungsgemäßen Optimierungsverfahrens berücksichtigt werden können. Außerdem bietet das den Vorteil einer einfacheren Berechnung. So kann gegebenenfalls zu Beginn des Verfahrens mit größeren Schrittwerten gearbeitet werden, um eine schnellere Konvergenz zu erreichen, während später mit kleineren Schrittwerten gearbeitet wird, um eine höhere Genauigkeit zu erzielen.

## Patentansprüche

1. Verfahren zur Optimierung von Betriebsparametern einer Windenergieanlage, insbesondere in Bezug auf deren Rotor/Generator-System, unter
Bestimmen eines oberen und eines unteren Intervallgrenzwerts (110) für einen zu optimierenden Parameter,
**gekennzeichnet durch**
einen Zyklus mit alternierendem Betreiben (112, 114, 118, 120) der Windenergieanlage mit den Intervallgrenzwerten, wobei jeweils ein Datensatz mit einer Zielgröße erzeugt wird (116, 122), und zwar über eine einstellbare Anzahl von Wiederholungen (126),
Auswerten der Datensätze zu den Intervallgrenzwerten unter Bildung eines Gütemaß
Identifizieren des Intervallgrenzwerts mit dem schlechteren Gütemaß (130),
Ersetzen zumindest dieses Intervallgrenzwerts **durch** Verschieben um einen Schrittwert Δ in Richtung des anderen Intervallgrenzwerts (134, 136),
Wiederholen des Zyklus (137).

2. Verfahren nach Anspruch 1, **dadurch gekennzeichnet, dass** die Intervallgrenzwerte direkt vorgegeben werden.

3. Verfahren nach Anspruch 1, **dadurch gekennzeichnet, dass** die Intervallgrenzwerte durch einen Betriebswert (α_{B}) und einen Streuwert (α_{OFF}) bestimmt sind.

4. Verfahren nach Anspruch 3, **dadurch gekennzeichnet, dass** zur Änderung zumindest des schlechteren Intervallgrenzwerts der Betriebswert (α_{B}) um den Schrittwert Δ verändert wird.

5. Verfahren nach einem der Ansprüche 1 bis 4, **dadurch gekennzeichnet, dass** der Abstand der Intervallgrenzwerte um einen Verengungswert δ verringert wird, vorzugsweise durch Verkleinern des Streuwerts (α_{OFF}).

6. Verfahren nach einem der Ansprüche 1 bis 5, **dadurch gekennzeichnet, dass** die Wiederholung des Zyklus so lange durchgeführt wird, bis ein vorgebbares Abbruchkriterium (ε) erreicht ist (130).

7. Verfahren nach Anspruch 5, **dadurch gekennzeichnet, dass** die Wiederholung des Zyklus so lange durchgeführt wird, bis die Intervallgrenzwerte einen Abstand von (ε') erreicht haben.

8. Verfahren nach Anspruch 3 oder 4, **dadurch gekennzeichnet, dass** ein Prädiktor zur Bestimmung des Schrittwerts Δ und gegebenenfalls der Verengungswerts δ verwendet wird (131).

9. Verfahren nach einem der vorhergehenden Ansprüche, **dadurch gekennzeichnet, dass** das statistische Gütemaß durch eine Summenbildung berechnet wird(128).

10. Verfahren nach einem der vorhergehenden Ansprüche, **dadurch gekennzeichnet, dass** der Datensatz mehrere Zielgrößen enthält und das Gütemaß mehrdimensional gebildet wird.

11. verfahren nach einem der vorhergehenden Ansprüche, **dadurch gekennzeichnet, dass** der Parameter der Anstellwinkel des Rotorblatts und die Zielgröße die abgegebene elektrische Leistung oder Energie ist.

12. Verfahren nach einem der Ansprüche 1 bis 11, **dadurch gekennzeichnet, dass** der Parameter eine Momenten-Kennlinie ist.

13. Verfahren nach einem der Ansprüche 10 bis 12, **dadurch gekennzeichnet, dass** als Zielgröße zusätzlich eine Strukturbelastung und/oder eine Geräuschemission verwendet wird.

14. windenergieanlage mit einem auf einem Unterbau (1) angeordneten Maschinenhaus (2) und einem an dessen Stirnseite drehbar angeordneten Rotor (3), einem dadurch angetriebenen Generator (5) zur Abgabe elektrischer Energie über einen Umrichter (7), und einer Steuereinrichtung (6), die einen Mikroprozessor (60) und eine Speichereinrichtung (64) aufweist, sowie eine Messeinrichtung (23),
**dadurch gekennzeichnet, dass**
die Steuereinrichtung (6) im Betrieb der Anlage das verfahren nach einem der Ansprüche 1 bis 13 ausführt.

## Claims

1. A method for optimising operating parameters of a wind energy installation, in particular in relation to its rotor/generator system, by
defining an upper and a lower interval limit value (110) for a parameter to be optimised,
**characterised by**
a cycle with alternate operation (112,114,118,120) of the wind energy installation with the interval limit values, wherein in each case a data record is produced with a target variable (116,122), that is over a variable number of repetitions (126),
evaluating the data records relating to the interval limit values to form a quality measure,
identifying an interval limit value with a poorer quality measure (130),
replacing at least this interval limit value by shifting by a step value Δ in the direction of another interval limit value (134,136),
repeating the cycle (137).

2. A method according to Claim 1, **characterised in that** the interval limit values are directly predetermined.

3. A method according to Claim 1, **characterised in that** the interval limit values are defined by an operating value (α_{B}) and a scatter value (α_{OFF}).

4. A method according to Claim 3, **characterised in that** in order to vary at least the poorer interval limit value the operating value (α_{B}) is varied by the step value Δ.

5. A method according to any one of Claims 1 to 4, **characterised in that** the separation between the interval limit values is reduced by a reduction value δ, preferably by decreasing the scatter value (α_{OFF}).

6. A method according to any one of Claims 1 to 5, **characterised in that** the repetition of the cycle is carried out until a predeterminsable termination criterion (ε) is reached (130).

7. A method according to Claim 5, **characterised in that** the repetition of the cycle is carried out until the interval limit values have reached a separation of (ε').

8. A method according to Claim 3 or 4, **characterised in that** a predictor is used to determine the step value Δ and, optionally, the reduction value δ (131).

9. A method according to any one of the preceding Claims, **characterised in that** the statistical quality measure is calculated by summing (128).

10. A method according to the preceding Claims, **characterised in that** the data record contains a plurality of target variables and the quality measure is of multidimensional form.

11. A method according to any one of the preceding Claims, **characterised in that** the parameter is the angle of incidence of the rotor blade and the target variable is the electric power or energy output.

12. A method according to any one of Claims 1 to 11, **characterised in that** the parameter is a torque characteristic.

13. A method according to any one of Claims 10 to 12, **characterised in that** a structural load and/or noise emission is additionally used as the target variable.

14. A wind energy installation with a nacelle (2) arranged on a substructure (1) and with a rotor (3) which is rotatably arranged on an end face of the nacelle, with a generator (5) which is driven by the rotor for the output of electric energy via a converter (7), and with a control device (6) which has a microprocessor (60), a memory device (64) and a measuring device (23),
**characterised in that**,
in operating the installation, the control device (6) carries out the method according to any one of Claims 1 to 13.

## Revendications

1. Procédé pour optimiser les paramètres de fonctionnement d'une éolienne, en particulier par rapport au système rotor/générateur de celle-ci, moyennant
la détermination de valeurs limites (110), supérieure et inférieure, d'une fourchette pour un paramètre à optimiser
**caractérisé par**
un cycle avec des fonctionnements (112, 114, 118, 120) alternés de l'éolienne avec les valeurs limites de la fourchette, respectivement un enregistrement de données étant engendré (116, 122) avec une grandeur cible, à savoir pendant un nombre réglable d'itérations (126),
analyse des enregistrements de données par rapport aux valeurs limites de la fourchette moyennant la formation d'une grandeur qualitative,
identification de la valeur limite de la fourchette par la grandeur qualitative (130) plus mauvaise,
remplacement au moins de cette valeur limite de la fourchette par un déplacement selon un incrément Δ vers l'autre valeur limite de la fourchette (134, 136),
itération du cycle (137).

2. Procédé selon la revendication 1, **caractérisé en ce que** les valeurs limites de la fourchette sont définies directement.

3. Procédé selon la revendication 1, **caractérisé en ce que** les valeurs limites de la fourchette sont déterminées par une valeur de service (α_{B}) et une valeur de dispersion (α_{OFF}).

4. Procédé selon la revendication 3, **caractérisé en ce que**, pour modifier au moins la valeur limite la plus mauvaise de la fourchette, la valeur de service (α_{B}) est modifiée de l'incrément Δ.

5. Procédé selon l'une quelconque des revendications 1 à 4, **caractérisé en ce que** l'écart entre les valeurs limites de la fourchette est diminué d'une valeur de contraction δ, de préférence par la diminution de la valeur de dispersion (α_{OFF}).

6. Procédé selon l'une quelconque des revendications 1 à 5, **caractérisé en ce que** le cycle est réitéré jusqu'à ce qu'un critère de rupture (ε) prédéfinissable soit atteint (130).

7. Procédé selon la revendication 5, **caractérisé en ce que** le cycle est réitéré jusqu'à ce que les valeurs limites de la fourchette aient atteint un écart de (ε').

8. Procédé selon la revendication 3 ou 4, **caractérisé en ce que** l'on utilise (131) un prédicteur pour déterminer l'incrément Δ et, le cas échéant, la valeur de contraction δ.

9. Procédé selon l'une quelconque des revendications précédentes, **caractérisé en ce que** la grandeur qualitative statistique est calculée (128) par la formation d'une somme.

10. Procédé selon l'une quelconque des revendications précédentes, **caractérisé en ce que** l'enregistrement de données contient plusieurs grandeurs cibles et la grandeur qualitative est formée de manière pluridirectionnelle.

11. Procédé selon l'une quelconque des revendications précédentes, **caractérisé en ce que** le paramètre est l'angle d'attaque de la pale du rotor et la grandeur cible est la puissance électrique ou énergie électrique dégagée.

12. Procédé selon l'une quelconque des revendications 1 à 11, **caractérisé en ce que** le paramètre est une courbe caractéristique de couples.

13. Procédé selon l'une quelconque des revendications 10 à 12, **caractérisé en ce que**, pour la grandeur cible, on utilise en plus une sollicitation structurelle et/ou une émission de bruits.

14. Éolienne, comportant une nacelle (2), montée sur un soubassement (1), et un rotor (3), monté rotatif sur le côté frontal de ladite nacelle, un générateur (5) actionné par ledit rotor pour engendrer de l'énergie électrique par l'intermédiaire d'un convertisseur de fréquence (7), et un dispositif de commande (6) muni d'un microprocesseur (60) et d'une unité de mémoire (64), ainsi qu'un dispositif de mesure (23),
**caractérisée en ce que**
le dispositif de commande (6) exécute, en cours de service de l'éolienne, le procédé selon l'une quelconque des revendications 1 à 13.
